# EUROPÄISCHE PATENTSCHRIFT

(11) **EP 3 256 749 B1**
(45) Veröffentlichungstag und Bekanntmachung des Hinweises auf die Patenterteilung: **27.05.2020**
(21) Anmeldenummer: 16706129.0
(22) Anmeldetag: 28.01.2016
(51) Int. Cl.: F16D 7/02, F16D 41/20

(54) **RIEMENSCHEIBENENTKOPPLER**
PULLEY DECOUPLER
DISPOSITIF DE DÉCOUPLAGE D'UNE POULIE À COURROIE

(30) Priorität: 12.02.2015 DE 102015202527
(43) Veröffentlichungstag der Anmeldung: 20.12.2017
(73) Patentinhaber: Schaeffler Technologies AG & Co. KG, 91074 Herzogenaurach (DE)
(72) Erfinder: KASTNER, Michael, 91052 Erlangen (DE); ARNETH, Roland, 91330 Eggolsheim (DE)
(86) Internationale Anmeldenummer: PCT/DE2016/200060
(87) Internationale Veröffentlichungsnummer: WO 2016/127991

(56) Entgegenhaltungen:
- DE-A1-102009 052 611
- JP-A- 2014 515 465
- US-A1- 2011 065 537

## Beschreibung

Die Erfindung betrifft einen Riemenscheibenentkoppler zur Antriebsmomentübertragung vom Riemen eines Nebenaggregate-Riementriebs auf die Welle eines der Nebenaggregate, mit:
- einer Riemenscheibe,
- einer auf der Welle zu befestigenden Nabe
- und einer im Antriebsmomentfluss zwischen der Riemenscheibe und der Nabe angeordneten Reihenschaltung aus einem Schlingband als Einwegkupplung und einer Schraubendrehfeder, die sich in Richtung der Drehachse des Riemenscheibenentkopplers erstrecken,
wobei sich die Schraubendrehfeder unter Übertragung des Antriebsmoments radial aufweitet und deren Enden eine axial rampenförmig ansteigende Federabstützfläche eines ersten Federtellers und eines zweiten Federtellers kontaktieren.

Drehschwingungen und -ungleichförmigkeiten, die von der Kurbelwelle einer Brennkraftmaschine in deren Nebenaggregate-Riementrieb eingeleitet werden, können bekanntlich durch Riemenscheibenentkoppler kompensiert werden, die im Englischen üblicherweise als Decoupler bezeichnet und typischerweise als Generator-Riemenscheibe ausgebildet sind. Die Einwegkupplung überträgt im geschlossenen Zustand das Antriebsmoment von der Riemenscheibe auf die Nabe, wobei die Elastizität der mit der Einwegkupplung in Reihe geschalteten Schraubendrehfeder die aus dem Riementrieb stammenden Drehungleichförmigkeiten glättet. Bei verzögert rotierender Riemenscheibe öffnet die Einwegkupplung, wobei - dann umgekehrt - kein nennenswertes Drehmoment von der Nabe auf die Riemenscheibe übertragen werden kann, so dass die träge Generatorwelle die Riemenscheibe überholen kann.

Ein Riemenscheibenentkoppler mit radial innerer Einwegkupplung und radial äußerer Schraubendrehfeder ist aus der DE 10 2009 052 611 A1 bekannt. Ein Riemenscheibenentkoppler mit demgegenüber radial vertauschter Anordnung von Einwegkupplung und Schraubendrehfeder geht beispielsweise aus der US 8,047,920 B2 hervor. Die Schraubendrehfeder hat jeweils schenkellose Enden, deren Stirnseiten sich im Druckkontakt mit Stufen der axial rampenförmig ansteigenden Federabstützflächen befinden.

Weitere Riemenscheibenentkoppler sind aus der US 2011/065537 A1 und der JP 2014 515465 A bekannt.

Ausgehend hiervon liegt der vorliegenden Erfindung die Aufgabe zugrunde, einen derartigen Riemenscheibenentkoppler in einer vereinfachten konstruktiven Ausgestaltung anzugeben.

Die Lösung hierfür ergibt sich aus den Merkmalen des Anspruchs 1. Demnach soll zumindest einer der Federteller ein Blechumformteil mit der daran angeformten Federabstützfläche sein. Es liegen also ein oder bevorzugt beide Enden der Schraubendrehfeder unmittelbar an den als Blechumformteil hergestellten Federtellern an, so dass hinsichtlich der rampenförmigen Abstützfläche die bislang üblichen Ausführungen sowohl eines als kostenintensives Urformteil hergestellten Federtellers als auch eines Federtellers mit einem separaten, rampenförmigen Zusatzbauteil durch das kostengünstige einteilige Blechumformteil substituiert werden können.

Das Schlingband ist radial zwischen der Riemenscheibe und der Schraubendrehfeder angeordnet, und dessen Schlingbandenden weiten sich unter Übertragung des Antriebsmoments radial auf, wobei sich das im Antriebsmomentfluss seitens der Riemenscheibe verlaufende erste Schlingbandende gegen einen in der Riemenscheibe drehfesten Innenmantel verspannt und wobei sich das im Antriebsmomentfluss seitens der Schraubendrehfeder verlaufende zweite Schlingbandende gegen den Innenmantel eines Außenrings des ersten Federtellers verspannt, der als Blechumformteil mit einem Bord und der daran angeformten Federabstützfläche ausgebildet und am Außenmantel des Außenrings drehbar in der Riemenscheibe gelagert ist.

Weitere Merkmale der Erfindung ergeben sich aus der nachfolgenden Beschreibung und aus den Zeichnungen, in denen ein Ausführungsbeispiel eines erfindungsgemäßen Riemenscheibenentkopplers für den im Nebenaggregate-Riementrieb einer Brennkraftmaschine angeordneten Generator dargestellt ist. Es zeigen:
- Figur 1: den Riemenscheibenentkoppler in perspektivischer Gesamtdarstellung;
- Figur 2: den Riemenscheibenentkoppler im perspektivischen Längsschnitt;
- Figur 3: den Riemenscheibenentkoppler in explodierter Darstellung;
- Figur 4: die aus der Riemenscheibe und einer Hülse bestehende Baugruppe in explodierter Darstellung;
- Figur 5: die Baugruppe gemäß Figur 4 im Längsschnitt;
- Figur 6: die Hülse in perspektivischer Darstellung;
- Figur 7: eine alternative Hülse in perspektivischer Darstellung;
- Figur 8: eine weitere alternative Hülse in perspektivischer Darstellung;
- Figur 9: den ersten Federteller in perspektivischer Darstellung;
- Figur 10: den ersten Federteller in gegenüberliegender perspektivischer Darstellung;
- Figur 11: eine Mitnehmerscheibe in perspektivischer Darstellung;
- Figur 12: eine Druckscheibe in perspektivischer Darstellung;
- Figur 13: die aus der Nabe und dem zweiten Federteller bestehende Baugruppe in explodierter Darstellung;
- Figur 14: die Baugruppe gemäß Figur 13 im perspektivischen Längsschnitt;
- Figur 15: den zweiten Federteller in perspektivischer Darstellung;
- Figur 16: den zweiten Federteller in gegenüberliegender perspektivischer Darstellung.

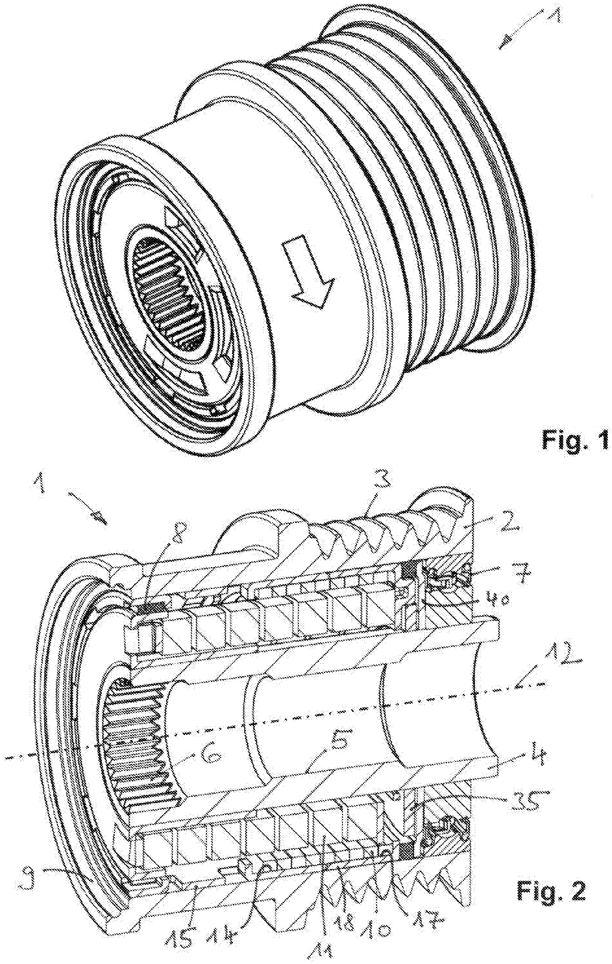

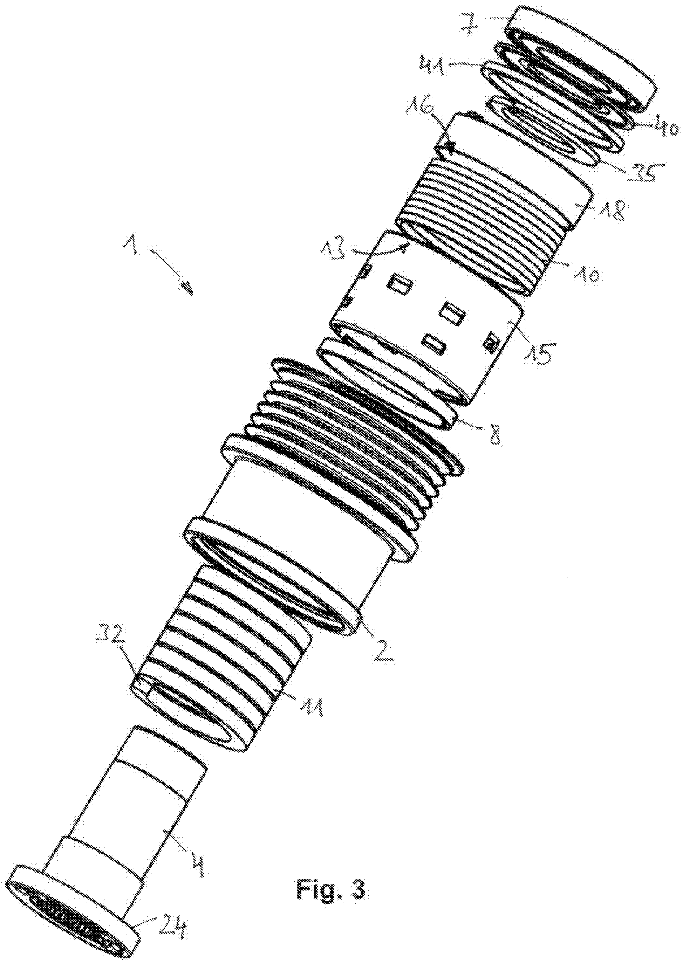

Die Figuren 1 bis 3 zeigen den Riemenscheibenentkoppler 1, nachfolgend kurz als Entkoppler 1 bezeichnet, in verschiedenen perspektivischen Darstellungen, nämlich als Gesamtheit in Figur 1, im Längsschnitt in Figur 2 und als Explosion in Figur 3. Eine hohlzylindrische Riemenscheibe 2, deren vom Riemen umschlungener Außenmantel 3 der Poly-V-Form des Riemens entsprechend profiliert ist, wird vom Riemen in der in Figur 1 eingezeichneten Drehrichtung angetrieben. Die Riemenscheibe 2 ist drehbar auf einer Nabe 4 gelagert, die fest mit der Generatorwelle verschraubt wird. Hierzu hat die Nabe 4 im Mittelabschnitt 5 ein nicht dargestelltes Innengewinde und am generatorfernen, vorderen Endabschnitt einen Innenvielzahn 6 als Eingriffskontur für das Schraubwerkzeug. Die Lagerung der Riemenscheibe 2 auf der Nabe 4 erfolgt am generatorseitigen Ende radial und axial mittels eines Wälzlagers 7 und am generatorfernen Ende radial mittels eines Gleitlagers 8. Das Wälzlager 7 ist ein einreihiges und beidseitig abgedichtetes Kugellager, und das Gleitlager 8 ist ein Radiallagerring aus Polyamid. Der Innendurchmesser der Riemenscheibe 2 ist im gesamten Bereich zwischen dem Radiallagerring 8 und dem Kugellager 7 einheitlich, so dass dieser Innendurchmesserbereich einer besonders einfachen und kostengünstigen Drehbearbeitung zugänglich ist. Die Riemenscheibe 4 hat lediglich am generatorfernen Ende eine im Durchmesser gestufte Erweiterung 9, in die nach der Montage des Entkopplers 1 auf den Generator eine hier nicht dargestellte Schutzkappe eingeschnappt wird.

Die für die Funktion des Entkopplers 1 wesentlichen Komponenten sind eine Einwegkupplung und eine - bezüglich des Antriebsmomentflusses von der Riemenscheibe 2 auf die Nabe 4 - mit der Einwegkupplung in Reihe geschaltete Entkopplerfeder 11. Bei der Einwegkupplung handelt es sich um ein Schlingband 10 und bei der Entkopplerfeder 11 um eine Schraubendrehfeder, die sich beide in Richtung der Drehachse 12 des Entkopplers 1 erstrecken. Die Schraubendrehfeder 11 und das Schlingband 10 sind vorliegend koaxial zur Drehachse 12, wobei das Schlingband 10 in dem radialen Ringraum zwischen der Riemenscheibe 2 und der Schraubendrehfeder 11 verläuft.

Sowohl das rechts gewickelte Schlingband 10 als auch die links gewickelte Schraubendrehfeder 11 sind vollständig zylindrisch und haben beidseitig schenkellose Enden, die folglich das Schlingband bzw. die Schraubendrehfeder bei der Übertragung des Antriebsmoments radial aufweiten. Dabei verspannt sich das im Antriebsmomentfluss seitens der Riemenscheibe 2 verlaufende erste Schlingbandende 13 gegen den zylindrischen Innenmantel 14 einer Hülse 15, die in der Riemenscheibe 2 drehbefestigt ist. Das im Antriebsmomentfluss seitens der Schraubendrehfeder 11 verlaufende zweite Schlingbandende 16 verspannt sich gegen den zylindrischen Innenmantel 17 eines ersten Federtellers 18, der in der Riemenscheibe 2 drehbar ist. Somit wird das von der Riemenscheibe 2 eingeleitete Antriebsmoment ausschließlich durch Haftreibung einerseits zwischen dem Innenmantel 14 der Hülse 15 und dem ersten Schlingbandende 13 und andererseits zwischen dem zweiten Schlingbandende 16 und dem Innenmantel 17 des ersten Federtellers 18 in die Schraubendrehfeder 11 eingeleitet und von dort aus auf die Nabe 4 übertragen.

Das Schlingband 10 ermöglicht bei Drehmomentumkehr ein Überholen der Generatorwelle und der darauf befestigten Nabe 4 gegenüber der Riemenscheibe 2. In diesem Zustand zieht sich das Schlingband 10 auf seinen (unbelasteten) Ausgangsdurchmesser zusammen und rutscht in der Hülse 15 und/oder im ersten Federteller 18 durch, wobei sich das dabei übertragbare Drehmoment auf das Gleitreibmoment zwischen den beiden durchrutschenden Kontaktpartnern reduziert.

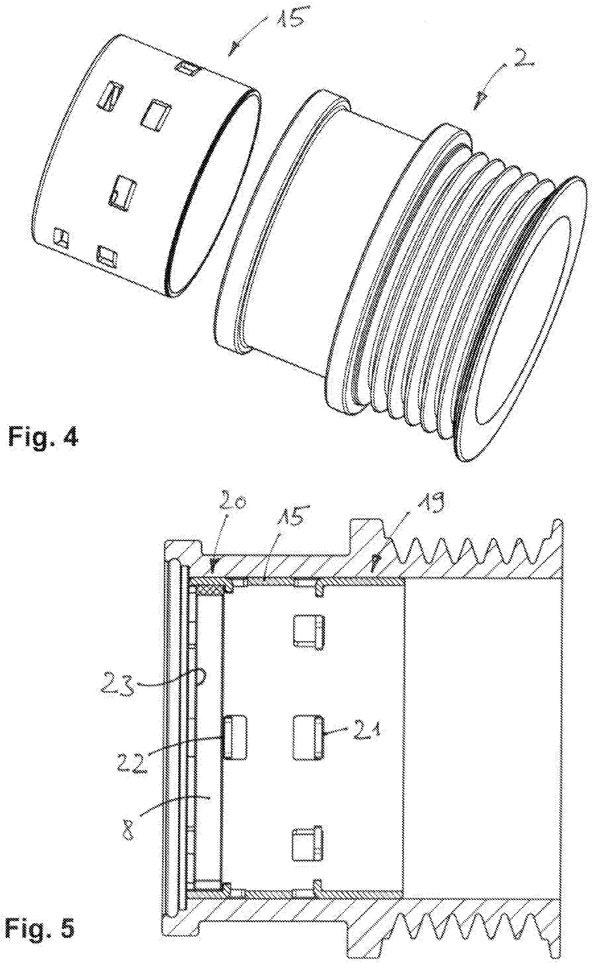

Die Figuren 4 und 5 zeigen die aus der Riemenscheibe 2, der an deren Innendurchmesser eingepressten Hülse 15 und dem Radiallagerring 8 gebildete Unterbaugruppe in explodierter Darstellung bzw. im Längsschnitt. Wie es in Zusammenschau mit Figur 2 erkennbar ist, hat die Hülse 15 einen ersten Axialabschnitt 19, in dem das erste Schlingbandende 13 verläuft, und einen zweiten Axialabschnitt 20, in dem der Radiallagerring 8 aufgenommen ist. Die Hülse 15 ist ein Blechumformteil und hat am Hülsenumfang radial einwärts angeformte Vorsprünge, die Axialanschläge 21, 22 und 23 bilden. Dabei sind der erste Axialabschnitt 19 durch den Axialanschlag 21 für das Schlingband 10 und der zweite Axialabschnitt 20 beidseitig durch die Axialanschläge 22 und 23 für den Radiallagerring 8 begrenzt. Dieser ist zwecks Montage zwischen die beiden Axialanschläge 22, 23 am Umfang geschlitzt.

Die die Axialanschläge 21, 22 bildenden Vorsprünge der in den Figuren 4 bis 6 als vergrößertes Einzelteil dargestellten Hülse 15 umfassen jeweils mehrere lokale Durchstellungen des Hülsenumfangs und als äußeren Axialanschlag 23 für den Radiallagerring 8 einen Bord mit mehreren umfänglich voneinander beabstandeten Segmenten.

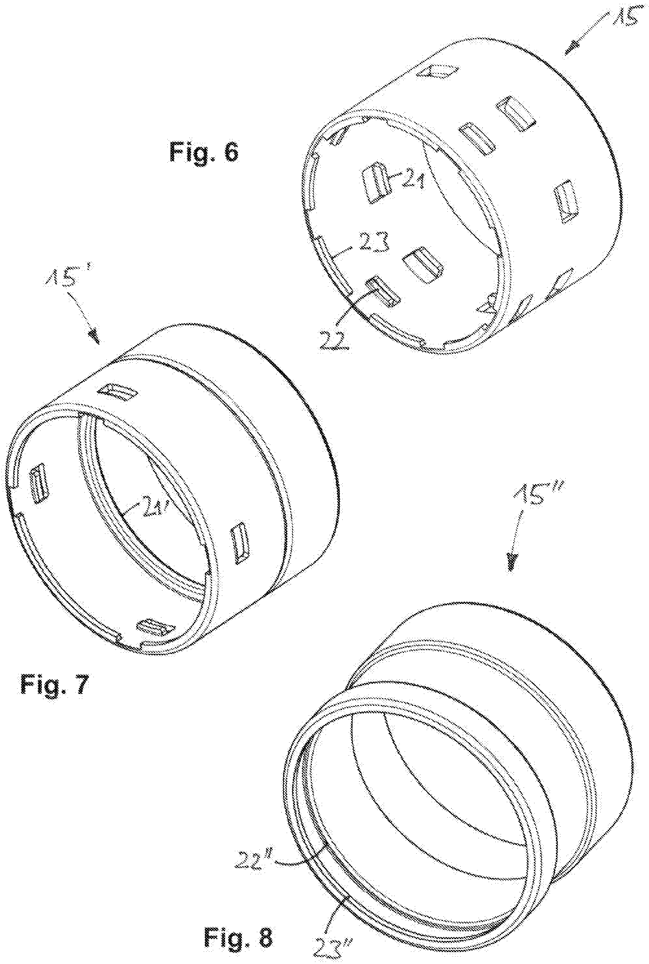

Die Hülsen 15' und 15" gemäß den Figuren 7 bzw. 8 haben eine demgegenüber alternative Formgebung. Bei der Hülse 15' ist der Axialanschlag 21' für das Schlingband 10 durch eine am Hülsenumfang umlaufende Rollierstufe ersetzt, und bei der Hülse 15" ist zusätzlich auch der innere Axialanschlag 22" für den Radiallagerring 8 durch eine solche Rollierstufe ersetzt. Dabei ist zudem der äußere Axialanschlag 23" für den Radiallagerring 8 ein umfänglich durchgehender Bord.

In einer weiteren (nicht dargestellten) Alternativausführung kann der zweite Axialabschnitt 20 der dann entsprechend gekürzten Hülse 15 auch entfallen, wobei in diesem Fall der Radiallagerring 8 unmittelbar am Innendurchmesser der Riemenscheibe 2 aufgenommen wäre.

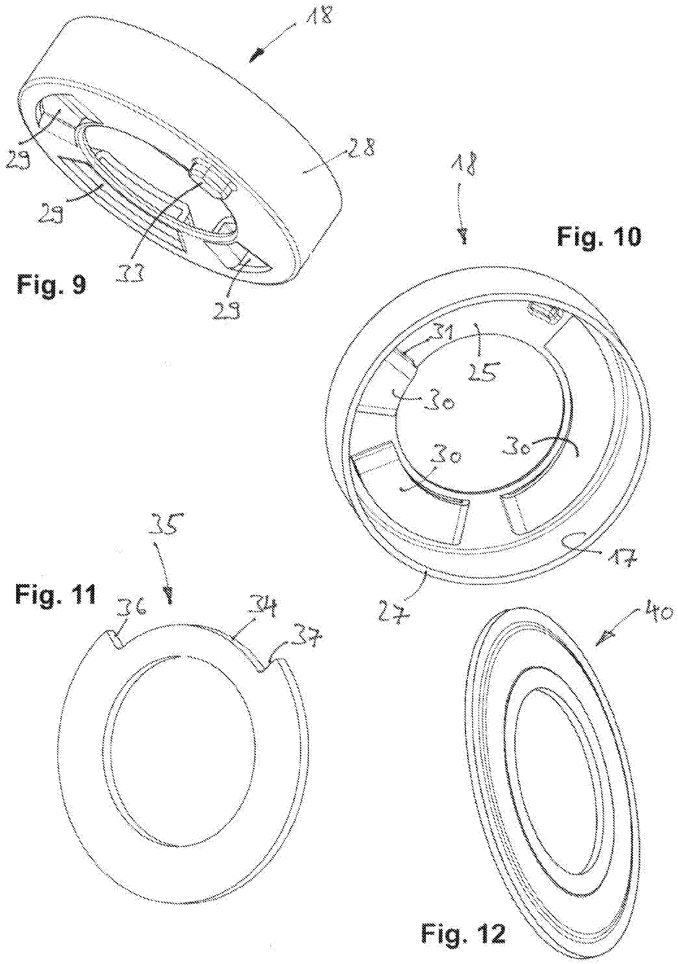

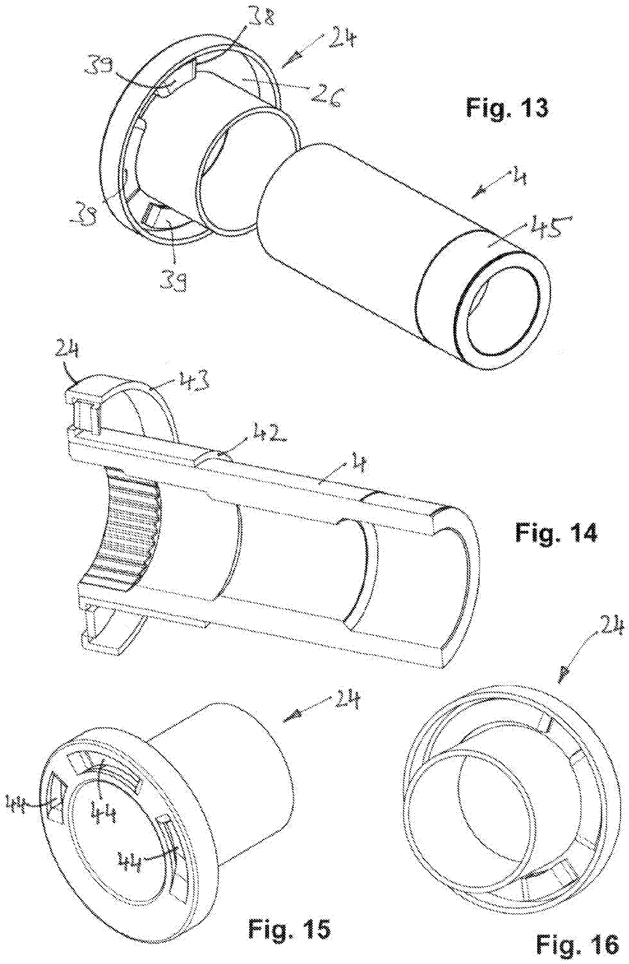

Die Schraubendrehfeder 11 ist mit leichter axialer Vorspannung zwischen dem ersten Federteller 18 und einem zweiten Federteller 24 (siehe Figur 13) eingespannt. Die Federteller 18, 24 sind ebenfalls Blechumformteile und weisen jeweils einen Bord 25 bzw. 26 auf, die die zugehörigen und gemäß Figur 3 schenkellosen Enden der Schraubendrehfeder 11 kontaktieren. Der in den Figuren 9 und 10 als vergrößertes Einzelteil dargestellte erste Federteller 18 umfasst einen Außenring 27, in dessen Innenmantel 17 das zweite Schlingbandende 16 hinein schlingt und an dessen Außenmantel 28 der erste Federteller 18 drehbar am Innendurchmesser der Riemenscheibe 2 gelagert ist. Der Bord 25 ist mit drei daran angeformten Durchstellungen 29 versehen, die eine axial rampenförmig ansteigende Federabstützfläche 30 bilden. Diese ermöglicht die Drehmomenteinleitung in das unmittelbar daran anliegende Schraubendrehfederende.

Die umfänglich voneinander beabstandeten Durchstellungen 29 sind kreisbogenförmig, wobei deren Bogenlängen mit zunehmender Axialerhebung abnehmen. Somit erfolgt die Übertragung des Antriebsmoments von der an der Durchstellung 29 mit der kürzesten Bogenlänge abfallenden Stufe 31 auf die Stirnseite des daran anliegenden und die Schraubendrehfeder radial aufweitenden Schraubendrehfederendes. Diese Stirnseite ist genauso wie die in Figur 3 sichtbare Stirnseite 32 des anderen Schraubendrehfederendes geformt. Alternativ zu den (seitlich offenen) Durchstellungen 29 ist es auch denkbar, dass die Federabstützfläche 30 durch eine oder mehrere (seitlich geschlossene) Sicken gebildet ist.

Die der Schraubendrehfeder 11 abgewandte Stirnseite des Bords 25 des ersten Federtellers 18 weist einen angeformten Vorsprung 33 auf, der in eine kreisbogenförmige Aussparung 34 einer drehfest auf der Nabe 4 sitzenden Mitnehmerscheibe 35 gemäß Figur 11 eingreift und zwischen den umfänglichen Enden 36 und 37 der Aussparung 34 verschwenkbar ist. Dabei ist das in Drehrichtung des Entkopplers 1 spätere Umfangsende 36 so positioniert, dass dieses Ende im Überholbetrieb des Generators und entgegen des Reibmoments des dann durchrutschenden Schlingbands 10 den ersten Federteller 18 über den Vorsprung 33 mitnimmt. In diesem Zustand rotieren der erste Federteller 18 und die Nabe 4 mit dem daran drehbefestigen zweiten Federteller 24 als gleichsam starre Einheit, wobei das sogenannte "ramp-up" der Schraubendrehfederenden verhindert wird. Dieses Ereignis droht dann aufzutreten, wenn sich der erste Federteller 18 und der zweite Federteller 24 unter umfänglicher Entspannung der Schraubendrehfeder 11 relativ zueinander verdrehen, so dass sich ein oder beide Stirnseiten 32 der Schraubendrehfederenden von den Stufen 31 und 38 der Federabstützflächen 30 bzw. 39 (siehe Figur 13) entfernen und an den Federabstützflächen 30, 39 hinauf wandern. Der sich dabei axial verkleinernde Bauraum für die Schraubendrehfeder 11 kann dazu führen, dass diese die beiden Federteller 18 und 24 in unzulässiger Weise voneinander weg drückt und so den Entkoppler 1 gewissermaßen axial auseinander sprengt.

Wie es in Zusammenschau mit Figur 2 deutlich wird, erfolgt die axiale Abstützung des ersten Federtellers 18 am Kugellager 7 und nicht an der Mitnehmerscheibe 35, die jeweils mit Axialluft zum ersten Federteller 18 einerseits und zu einer in Figur 12 dargestellten Druckscheibe 40 andererseits auf der Nabe 4 positioniert und folglich frei von Axiallast ist. Diese wird vielmehr vom ersten Federteller 18 auf einen gleitlagernden Axiallagerring 41 aus Polyamid und weiter über die radial innen zum Kugellager 7 hin gekröpfte Druckscheibe 40 auf den Innenring des Kugellagers 7 übertragen.

Die Figuren 13 bis 16 zeigen den zweiten Federteller 24 im Verbund mit der Nabe 4 bzw. als Einzelteil. Der zweite Federteller 24 ist mit einem vom Bord 26 abgewinkelten Innenring 42 auf der Nabe 4 aufgepresst und hat einen vom dazwischen liegenden Bord 26 abgewinkelten Außenring 43, auf dem der Radiallagerring 8 aufgenommen ist (siehe auch Figur 2). Die axial rampenförmig ansteigende Federabstützfläche 39 ist ebenfalls durch drei Durchstellungen 44 gebildet, die am Bord 26 angeformt sind, und liegt ebenfalls unmittelbar an dem dort verlaufenden Schraubendrehfederende an, wobei sich die Stufe 38 in ausschließlichem Druckkontakt mit der Stirnseite 32 des Schraubendrehfederendes befindet.

Die Nabe 4 hat zugunsten einer einfachen Drehbearbeitung einen im wesentlichen gleichmäßigen Außendurchmesser, der lediglich am generatorseitigen Nabenende geringfügig zurückgenommen ist und einen Absatz 45 für den dort aufgepressten Innenring des Kugellagers 7 bildet (siehe Figur 2).

### Bezugszeichenliste

- 1: Riemenscheibenentkoppler / Entkoppler
- 2: Riemenscheibe
- 3: Außenmantel der Riemenscheibe
- 4: Nabe
- 5: Mittelabschnitt der Nabe
- 6: Innenvielzahn
- 7: Wälzlager / Kugellager
- 8: Gleitlager / Radiallagerring
- 9: Erweiterung
- 10: Schlingband
- 11: Entkopplerfeder / Schraubendrehfeder
- 12: Drehachse
- 13: erstes Schlingbandende
- 14: Innenmantel der Hülse
- 15: Hülse
- 16: zweites Schlingbandende
- 17: Innenmantel des ersten Federtellers
- 18: erster Federteller
- 19: erster Axialabschnitt
- 20: zweiter Axialabschnitt
- 21: Axialanschlag
- 22: (innerer) Axialanschlag
- 23: (äußerer) Axialanschlag
- 24: zweiter Federteller
- 25: Bord des ersten Federtellers
- 26: Bord des zweiten Federtellers
- 27: Außenring des ersten Federtellers
- 28: Außenmantel des Außenrings
- 29: Durchstellung
- 30: Federabstützfläche
- 31: Stufe
- 32: Stirnseite des Schraubendrehfederendes
- 33: Vorsprung
- 34: Aussparung
- 35: Mitnehmerscheibe
- 36: Ende der Aussparung
- 37: Ende der Aussparung
- 38: Stufe
- 39: Federabstützfläche
- 40: Druckscheibe
- 41: Axiallagerring
- 42: Innenring des zweiten Federtellers
- 43: Außenring des zweiten Federtellers
- 44: Durchstellung
- 45: Absatz der Nabe

## Patentansprüche

1. Riemenscheibenentkoppler zur Antriebsmomentübertragung vom Riemen eines Nebenaggregate-Riementriebs auf die Welle eines der Nebenaggregate, mit:
- einer Riemenscheibe (2),
- einer auf der Welle zu befestigenden Nabe (4)
- und einer im Antriebsmomentfluss zwischen der Riemenscheibe (2) und der Nabe (4) angeordneten Reihenschaltung aus einem Schlingband (10) als Einwegkupplung und einer Schraubendrehfeder (11), die sich in Richtung der Drehachse (12) des Riemenscheibenentkopplers (1) erstrecken,
wobei sich die Schraubendrehfeder (11) unter Übertragung des Antriebsmoments radial aufweitet und deren Enden eine axial rampenförmig ansteigende Federabstützfläche (30, 39) eines ersten Federtellers (18) und eines zweiten Federtellers (24) kontaktieren, **dadurch gekennzeichnet, dass** das Schlingband (10) radial zwischen der Riemenscheibe (2) und der Schraubendrehfeder (11) angeordnet ist und dessen Schlingbandenden (13, 16) sich unter Übertragung des Antriebsmoments radial aufweiten, wobei sich das im Antriebsmomentfluss seitens der Riemenscheibe (2) verlaufende erste Schlingbandende (13) gegen einen in der Riemenscheibe (2) drehfesten Innenmantel (14) verspannt und wobei sich das im Antriebsmomentfluss seitens der Schraubendrehfeder (11) verlaufende zweite Schlingbandende (16) gegen den Innenmantel (17) eines Außenrings (27) des ersten Federtellers (18) verspannt, der als Blechumformteil mit einem Bord (25) und der daran angeformten Federabstützfläche (30) ausgebildet und am Außenmantel (28) des Außenrings (27) drehbar in der Riemenscheibe (2) gelagert ist.

2. Riemenscheibenentkoppler nach Anspruch 1, **dadurch gekennzeichnet, dass** beide Federteller (18, 24) Blechumformteile mit jeweils der daran angeformten Federabstützfläche (30, 39) sind, die durch kreisbogenförmige und umfänglich voneinander beabstandete Durchstellungen (29, 44) oder Sicken im Blechumformteil gebildet ist.

3. Riemenscheibenentkoppler nach Anspruch 1 oder 2, **dadurch gekennzeichnet, dass** der erste Federteller (18) auf der Stirnseite des Bords (25), die der Schraubendrehfeder (11) abgewandt ist, einen angeformten Vorsprung (33) hat, der zwischen den umfänglichen Enden (36, 37) einer kreisbogenförmigen Aussparung (34) in einer auf der Nabe (4) drehbefestigten Mitnehmerscheibe (35) verschwenkbar ist.

4. Riemenscheibenentkoppler nach Anspruch 3, **dadurch gekennzeichnet, dass** die Mitnehmerscheibe (35) frei von Axiallast zwischen dem ersten Federteller (18) und einem die Riemenscheibe (2) auf der Nabe (4) lagernden Wälzlager (7) angeordnet ist, wobei der erste Federteller (18) mittels eines Axiallagerrings (41) und einer Druckscheibe (40) am Wälzlager (7) abgestützt ist.

5. Riemenscheibenentkoppler nach einem der vorhergehenden Ansprüche, **dadurch gekennzeichnet, dass** sich das erste Schlingbandende (13) gegen den Innenmantel (14) einer in der Riemenscheibe (2) drehbefestigten Hülse (15, 15', 15") verspannt, die einen ersten Axialabschnitt (19) hat, in dem das erste Schlingbandende (13) verläuft, und die einen zweiten Axialabschnitt (20) hat, in dem ein die Riemenscheibe (2) auf der Nabe (4) gleitlagernder Radiallagerring (8) aufgenommen ist.

6. Riemenscheibenentkoppler nach Anspruch 5, **dadurch gekennzeichnet, dass** der erste Axialabschnitt (19) durch einen Axialanschlag (21, 21') für das Schlingband (10) begrenzt ist und dass der zweite Axialabschnitt (20) beidseitig durch Axialanschläge (22, 22", 23, 23") für den Radiallagerring (8) begrenzt ist, wobei die Hülse (15, 15', 15") ein in der Riemenscheibe (2) eingepresstes Blechumformteil ist und die Axialanschläge (21, 21', 22, 22", 23, 23") durch radial einwärts am Hülsenumfang angeformte Vorsprünge gebildet sind.

7. Riemenscheibenentkoppler nach Anspruch 5 oder 6, **dadurch gekennzeichnet, dass** der zweite Federteller (24) mit einem auf der Nabe (4) aufgepressten Innenring (42) und einem Außenring (43), auf dem der Radiallagerring (8) aufgenommen ist, als Blechumformteil mit einem den Innenring (42) mit dem Außenring (43) verbindenden Bord (26) und der daran angeformten Federabstützfläche (39) ausgebildet ist.

## Claims

1. A pulley decoupler for transferring drive torque from the belt of an accessories belt drive to the shaft of one of the accessories, having:
- a pulley (2),
- a hub (4) to be mounted on the shaft
- and a series connection arranged in the drive torque flow between the pulley (2) and the hub (4), of a wrap-around belt (10) as a one-way clutch and a helical torsion spring (11) which extend in the direction of the rotational axis (12) of the pulley decoupler (1),
wherein the helical torsion spring (11) expands radially while transferring the drive torque and its ends come in contact with an axially rising, ramp-like spring support surface (30, 39) of a first spring plate (18) and a second spring plate (24), **characterised in that** the wrap-around belt (10) is arranged radially between the pulley (2) and the helical torsion spring (11), and the wrap-around belt ends (13, 16) thereof expand radially while transferring the drive torque, wherein the first wrap-around belt end (13) running in the drive torque flow on the pulley (2) side, is braced against an inner casing (14) rotationally fixed in the pulley (2) and wherein the second wrap-around belt end (16) running in the drive torque flow on the helical torsion spring (11) side, is braced against the inner casing (17) of an outer ring (27) of the first spring plate (18), which is formed as a sheet metal part with a rim (25) and the spring support surface (30) formed thereon and on the outer casing (28) of the outer ring (27) is rotatably mounted in the pulley (2).

2. The pulley decoupler according to claim 1, **characterised in that** both spring plates (18, 24) are sheet metal parts, each with the spring support surface (30, 39) formed thereon, which is formed by circular arc-shaped and circumferentially spaced passages (29, 44) or beads in the sheet metal part.

3. The pulley decoupler according to claim 1 or 2, **characterised in that** the first spring plate (18) on the front side of the rim (25) facing away from the helical torsion spring (11) has a projection (33) formed thereon which can be pivoted between the circumferential ends (36, 37) of a circular arc-shaped recess (34) in a drive plate (35) which is rotationally fixed on the hub (4).

4. The pulley decoupler according to claim 3, **characterised in that** the drive plate (35) is arranged free of axial load between the first spring plate (18) and a roller bearing (7) supporting the pulley (2) on the hub (4), wherein the first spring plate (18) is supported on the roller bearing (7) by means of an axial bearing ring (41) and a pressure plate (40).

5. The pulley decoupler according to one of the preceding claims, **characterised in that** the first wrap-around belt end (13) is braced against the inner casing (14) of a sleeve (15, 15', 15") which is rotationally fixed in the pulley (2) and which has a first axial section (19) in which the first wrap-around belt end (13) runs and which has a second axial section (20) in which a radial bearing ring (8), which holds the belt pulley (2) on the hub (4), is received.

6. The pulley decoupler according to claim 5, **characterised in that** the first axial section (19) is delimited by an axial stop (21, 21') for the wrap-around belt (10) and **in that** the second axial section (20) is delimited on both sides by axial stops (22, 22", 23, 23") for the radial bearing ring (8), wherein the sleeve (15, 15', 15") is a sheet metal part pressed into the pulley (2) and the axial stops (21, 21', 22, 22", 23, 23") are formed by projections formed radially inwards on the sleeve circumference.

7. The belt pulley decoupler according to claim 5 or 6, **characterised in that** the second spring plate (24) having an inner ring (42) pressed onto the hub (4) and an outer ring (43) on which the radial bearing ring (8) is received, is formed as a sheet metal part having a rim (26) connecting the inner ring (42) to the outer ring (43) and the spring support surface (39) formed thereon.

## Revendications

1. Dispositif de découplage d'une poulie à courroie pour la transmission du couple d'entraînement de la courroie d'un entraînement à courroie de composants auxiliaires à l'arbre de l'un des composants auxiliaires, avec :
- une poulie à courroie (2),
- un moyeu à fixer sur l'arbre (4)
- et un couplage en série constitué d'une bande d'enroulement (10), comme embrayage unidirectionnel et d'un ressort de torsion hélicoïdal (11), disposé dans le flux du couple d'entraînement entre la poulie à courroie (2) et le moyeu (4), qui s'étendent dans le sens de l'axe de rotation (12) du dispositif de découplage d'une poulie à courroie (1),
le ressort de torsion hélicoïdal (11) se dilatant radialement tout en transmettant le couple d'entraînement et dont les extrémités entrent en contact avec une surface de support de ressort en forme de rampe axiale (30, 39) d'une première coupelle de ressort (18) et d'une seconde coupelle de ressort (24), **caractérisé en ce que** la bande d'enroulement (10) est disposée radialement entre la poulie à courroie (2) et le ressort de torsion hélicoïdal (11) et **en ce que** ses extrémités de bande d'enroulement (13, 16) se dilatent radialement tout en transmettant le couple d'entraînement, la première extrémité de bande d'enroulement (13) passant dans le flux du couple d'entraînement côté poulie à courroie (2) se déformant contre une chemise intérieure (14) non rotative dans la poulie à courroie (2), et la seconde extrémité de bande d'enroulement (16) passant dans le flux du couple d'entraînement côté ressort de torsion hélicoïdal (11) se déformant contre la chemise intérieure (17) d'une bague extérieure (27) de la première coupelle de ressort (18), laquelle est formée comme une pièce en tôle avec un rebord (25) et la surface de support de ressort (30) formée sur celle-ci et est montée sur la chemise extérieure (28) de la bague extérieure (27) de manière rotative dans la poulie à courroie (2).

2. Dispositif de découplage d'une poulie à courroie selon la revendication 1, **caractérisé en ce que** les deux coupelles de ressort (18, 24) sont des pièces en tôle, chacune avec la surface de support de ressort (30, 39) formée sur celle-ci, laquelle est constituée par des passages circulaires (29, 44) en forme d'arc et espacés circonférentiellement ou des collets dans la pièce en tôle.

3. Dispositif de découplage d'une poulie à courroie selon la revendication 1 ou 2, **caractérisé en ce que** la première coupelle de ressort (18) sur l'avant du bord (25) opposé au ressort de torsion hélicoïdal (11) présente une protubérance formée (33) pouvant pivoter entre les extrémités circonférentielles (36, 37) d'un évidement (34) en forme d'arc de cercle dans un disque d'entraînement (35) fixé à rotation sur le moyeu (4).

4. Dispositif de découplage d'une poulie à courroie selon la revendication 3, **caractérisé en ce que** le disque d'entraînement (35) est disposé sans charge axiale entre la première coupelle de ressort (18) et un palier à roulement (7) supportant la poulie à courroie (2) sur le moyeu (4), la première coupelle de ressort (18) étant supportée sur le palier à roulement (7) au moyen d'une bague de roulement axial (41) et d'une rondelle de butée (40).

5. Dispositif de découplage d'une poulie à courroie selon l'une quelconque des revendications précédentes, **caractérisé en ce que** la première extrémité de bande d'enroulement (13) est déformée contre la chemise intérieure (14) d'un manchon (15, 15', 15") fixé à rotation dans la poulie à courroie (2) et qui présente une première section axiale (19) dans lequel passe la première extrémité de bande d'enroulement (13) et une seconde section axiale (20) dans laquelle est logé un roulement radial (8) faisant coulisser la poulie à courroie (2) sur le moyeu (4).

6. Dispositif de découplage d'une poulie à courroie selon la revendication 5, **caractérisé en ce que** la première section axiale (19) est délimitée par une butée axiale (21, 21') pour la bande d'enroulement (10) et **en ce que** la seconde section axiale (20) est délimitée des deux côtés par des butées axiales (22, 22", 23, 23") pour le roulement radial (8), le manchon (15, 15', 15") étant une pièce en tôle pressée dans la poulie à courroie (2) et les butées axiales (21, 21', 22, 22", 23, 23") étant en forme de protubérances formées radialement vers l'intérieur sur la circonférence du manchon.

7. Dispositif de découplage d'une poulie à courroie selon la revendication 5 ou 6, **caractérisé en ce que** la seconde coupelle de ressort (24), avec une bague intérieure (42) pressée sur le moyeu (4) et une bague extérieure (43) sur laquelle est logé le roulement radial (8), est formée comme une pièce en tôle avec un rebord (26) reliant la bague intérieure (42) à la bague extérieure (43) et la surface de support de ressort (39) formée sur celle-ci.
